# EUROPÄISCHE PATENTANMELDUNG

(11) **EP 2 696 178 A2**
(43) Veröffentlichungstag der Anmeldung: **12.02.2014**
(21) Anmeldenummer: 13177942.3
(22) Anmeldetag: 25.07.2013
(51) Int. Cl.: G01F 23/30, G01F 23/00, G01F 23/60

(54) **Überfüllschutzsystem**

(30) Priorität: 08.08.2012 DE 202012007548 U
(71) Anmelder: IF Holding GmbH, 94557 Niederalteich (DE)
(72) Erfinder: Decker, Nico, 94469 Deggendorf (DE)
(74) Vertreter: advotec.

(57) **Zusammenfassung**

Überfüllschutzsystem (20) zur automatischen Überwachung eines Füllstands (A) in einem Behältnis (2), welches über ein Ventil durch ein Befüllsystem mit einer Flüssigkeit (3) befüllbar ist und eine Öffnung aufweist, bestehend aus einer Überwachungseinrichtung (4) und einer Sensoranordnung (5), welche mit der Überwachungseinrichtung (4) über eine Signalverbindung (10) zusammenwirkt und welche einen ersten Sensor (7) umfasst, der während einer Überwachungsdauer in dem Behältnis (2) angeordnet und mit diesem lösbar verbunden ist, dadurch gekennzeichnet, dass die Sensoranordnung (5) einen zweiten Sensor (6) umfasst, der während der Überwachungsdauer ebenfalls in dem Behältnis angeordnet und mit demselben lösbar verbunden ist, und dass der erste Sensor (7) bezogen auf eine zumindest weitgehend vertikale Füllrichtung tiefer angeordnet ist als der zweite Sensor (6).

## Beschreibung

Die Erfindung betrifft ein Überfüllschutzsystem mit den Merkmalen des Oberbegriffs des Anspruchs 1.

Ein derartiges Überfüllschutzsystem ist aus der Praxis bekannt und dient zur automatischen Überwachung eines Füllstands in einem Behältnis, welches über ein Befüllventil durch ein Befüllsystem mit einer Flüssigkeit befüllbar ist. Es umfasst eine Auswertelektronik, welche als Überwachungseinrichtung fungiert, und eine Sensoranordnung, welche mit der Überwachungseinrichtung über eine Signalverbindung zusammenwirkt und welche einen Sensor umfasst, der während einer Überwachungsdauer in dem Behältnis angeordnet ist.

Der Befüllvorgang von Tanks oder Speichern mit Flüssigkeit bedarf im Hinblick auf die Überfüllung der Behältnisse einer Überwachung, da es andernfalls zum Überlaufen kommen kann. Das Überlaufen über einen Maximalfüllstand geht meist einher mit Umweltbelastungen, so dass es möglichst vermieden werden sollte.

Überwachungseinrichtungen begleiten den Befüllvorgang auch bei dem Befüllen bis zu einem beliebigen Füllstand, der unterhalb des Maximalfüllstandes liegt. Ein derartiger Füllstand ergibt sich meist aus einer Bestell- bzw. Abnahmemenge eines Kunden. Auf dem genauen Auffüllen bis zu diesem Füllstand liegt daher besonderes Interesse, da ein Überfahren dieses Füllstands wirtschaftliche Einbußen mit sich bringen kann.

Vor einem wirtschaftlichen Hintergrund ist es zumeist sinnvoll, Pumpen mit hoher Leistung zu verwenden, um schnellstmögliche Befüllvorgänge zu ermöglichen. Mit dem bekannten Überfüllschutzsystem ist jedoch ein maximales oder genaues Befüllen von Behältnissen bis zu einer Maximal- bzw. gewünschten Füllgrenze bei gleichzeitig hoher Befüllgeschwindigkeit nur schwer möglich.

Das bekannte Überfüllschutzsystem umfasst einen Sensor, welcher eine maximale Füllhöhe misst und diese elektronisch an eine Auswertelektronik sendet. Die Auswertelektronik verarbeitet das Signal und schließt ein Füllventil, um so den weiteren Zulauf der Flüssigkeit zu beenden. Die Zeit, die zwischen dem Messen einer Füllhöhe und dem Schließen des Füllventils vergeht, ist bisher so lang, dass ein adäquates Anfahren der maximalen Füllhöhe sehr schwer möglich ist. Um trotz Überfüllschutz ein Überfüllen zu vermeiden, muss bisher entweder die Pumpenleistung reduziert oder die Befüllgrenze abgesenkt werden. Diese Maßnahmen führen entweder zu einem größeren Zeitaufwand oder zu einer reduzierter Füllmenge.

Der Erfindung liegt die Aufgabe zugrunde, ein Überfüllschutzsystem der einleitend genannten Gattung mit einer hinsichtlich der Befüllgeschwindigkeit und Befüllgrenze optimierten Sensoranordnung zu schaffen.

Diese Aufgabe ist erfindungsgemäß durch das Überfüllschutzsystem mit den Merkmalen des Anspruchs 1 gelöst.

Erfindungsgemäß wird mithin ein Überfüllschutzsystem zur automatischen Überwachung eines Füllstands in einem Behältnis vorgeschlagen, welches über ein Ventil durch ein Befüllsystem mit einer Flüssigkeit befüllbar ist und eine Öffnung aufweist, bestehend aus einer Überwachungseinrichtung und einer Sensoranordnung, welche mit der Überwachungseinrichtung über eine Signalverbindung zusammenwirkt und welche einen ersten Sensor umfasst, der während einer Überwachungsdauer in dem Behältnis angeordnet und mit diesem lösbar verbunden ist. Die Sensoranordnung umfasst zudem einen zweiten Sensor, der während der Überwachungsdauer ebenfalls in dem Behältnis angeordnet und mit demselben lösbar verbunden ist. Der erste Sensor ist bezogen auf eine zumindest weitgehend vertikale Füllrichtung tiefer angeordnet als der zweite Sensor.

Durch einen Einsatz eines zweiten Sensors in dem selben Überwachungsbehältnis ist es im Gegensatz zu bisher bekannten Überfüllschutzsystemen möglich, bei hoher Befiillgeschwindigkeit eine maximale Befüllgrenze zu realisieren bzw. einen dem zweiten Sensor zugeordneten Zielfüllstand zu realisieren. Dieser Zielfüllstand kann ein beliebiger, dem jeweiligen Anwendungsfall angepasster Füllstand des Behältnisses sein. Ein Überfüllen des Behältnisses würde vorliegen, wenn dieser Füllstand überschritten wäre.

Die Befüllung eines Behältnisses kann mit dem Überfüllschutzsystem nach der Erfindung in zwei Teilschritten erfolgen, und zwar dadurch, dass während des ersten Teilschritts das Behältnis mit einer maximalen Befüllgeschwindigkeit befüllt wird, so dass die Zeitvorteile von vorhandenen leistungsstarken Pumpensystemen zum Tragen kommen. Die Befüllung im ersten Teilschritt erfolgt solange, bis der Füllstand den gegenüber dem zweiten Sensor niedriger angeordneten ersten Sensor erreicht. Hat der Füllstand den ersten Sensor erreicht, wird die Befüllgeschwindigkeit reduziert. Registriert der gegenüber dem ersten Sensor höher angeordnete zweite Sensor einen zweiten Füllstand, beendet die Überwachungseinrichtung den Befüllvorgang umgehend, so dass eine schnelle und maximale Befüllung ohne Überfüllung gewährleistet ist.

Bei einer speziellen Ausführungsform des Überfüllschutzes nach der Erfindung ist mindestens einer der beiden Sensoren der Sensoranordnung ein Schwimmersensor. Ein Schwimmersensor ist in der Regel kostengünstig, einfach zu verbauen und zuverlässig zu betreiben. Es ist somit möglich, eine langlebige Sensoranordnung zu schaffen, welche der Belastung durch das häufige Verbinden an ein zu überwachendes Behältnis und Loslösen von einem überwachten Behältnis standhält.

Eine weitere vorteilhafte Ausführungsform des Überfüllschutzes nach der Erfindung zeichnet sich dadurch aus, dass der erste Sensor und der zweite Sensor an einer Trageeinheit befestigt sind und mit der Trageeinheit eine Baueinheit bilden. Es ist somit möglich, die Sensoranordnung mit wenigen Handgriffen in oder an dem Behältnis zu fixieren, da sie in einer Baueinheit zusammengefasst ist.

Bei einer weiteren Ausführungsform des Überfüllschutzes nach der Erfindung sind der erste Sensor und der zweite Sensor verschiebbar an der Trageeinheit befestigt. Es besteht damit die Möglichkeit, jeden Sensor einzeln an der Trageeinheit zu verschieben und in einer bestimmten Position zu fixieren, so dass die transportable Baueinheit der Beschaffenheit verschiedener Behältnisse und den gestellten Anforderungen angepasst werden kann.

Bei einer weiteren Ausführungsform des Überfüllschutzes nach der Erfindung ist der zweite Sensor während der Überwachungsdauer, bezogen auf die Füllrichtung, in Höhe eines Maximalfüllstands des Behältnisses angeordnet. Der zweite Sensor erfüllt die Funktion einer Grenzwertgebung, so dass dieser bei Anordnung in Höhe des Maximalfüllstands eine Maximalbefiillung signalisiert.

Bei einer weiteren Ausführungsform des Überfüllschutzes nach der Erfindung ist vorgesehen, dass der erste Sensor bei Messung eines ersten, mit dem ersten Sensor korrespondierenden Füllstands ein erstes Füllstandssignal an die Überwachungseinrichtung sendet. Vorteilhaft an einem ersten Füllstandssignal ist, dass ihm weitere Füllstandssignale folgen können, so dass der Überwachungseinrichtung mehr als ein relevanter Signalpunkt zur Verfügung gestellt wird, um eine genaue Befüllmenge zu realisieren.

Bei einer weiteren speziellen Ausführungsform des Überfüllschutzes nach der Erfindung reduziert die Überwachungseinrichtung nach Empfang des ersten Füllstandssignals eine Befüllgeschwindigkeit des Befüllsystems für das Behältnis. Die Überwachungseinrichtung hat zur Aufgabe, einen Befüllvorgang zu überwachen und zu steuern. Nachdem das erste Füllstandssignal von der Überwachungseinrichtung empfangen wurde, reduziert sie eine Pumpenleistung der Pumpe in Abhängigkeit von befiillrelevanten Einflussgrößen. Beispiele dieser Einflussgrößen sind die Pumpenleistung und die Befüllmenge. Vorteilhaft an der Leistungsreduktion und somit der verminderten Befüllgeschwindigkeit ist es, dass eine in der Regel große Pumpenleistung der Realisierung einer exakten Befüllmenge nicht entgegensteht. Es wird dadurch möglich, eine Befüllgrenze sehr genau anzufahren.

Bei einer weiteren Ausführungsform des Überfüllschutzsystems nach der Erfindung sendet der zweite Sensor bei Messung eines zweiten, mit dem zweiten Sensor korrespondierenden Füllstands ein zweites Füllstandssignal an die Überwachungseinrichtung. Das Senden des zweiten Füllstandssignals an die Überwachungseinrichtung ist ein letztes Signal zum aktuellen Füllstand und signalisiert den Maximalfüllstand.

Bei einer weiteren Ausführungsform des Überfüllschutzes nach der Erfindung ist vorgesehen, dass die Überwachungseinrichtung nach Empfang des zweiten Füllstandssignals einen mittels des Befüllsystems erfolgten Befüllvorgang beendet. Das Beenden des Befüllvorgangs realisiert zugleich eine exakte Befüllmenge, da keine weitere Flüssigkeit nachläuft.

Bei einer weiteren Ausführungsform des Überfüllschutzes nach der Erfindung ist die Distanz D zwischen einem Messpunkt des ersten Sensors und einem Messpunkt des zweiten Sensors bezogen auf eine Füllrichtung während der Überwachungsdauer gleich einer Strecke, welche dem Anstieg des Füllstands zwischen dem Registrieren des ersten Füllstands und dem Schließen des Befüllventils entspricht. Die Strecke D gibt den Abstand zwischen den Messpunkten des ersten und zweiten Sensors an. Zwischen den beiden Messpunkten liegt vorzugsweise die Strecke D, damit die größtmögliche Befüllgeschwindigkeit so lange wie möglich aufrecht erhalten werden kann und zusätzlich nach dem Registrieren der ersten Füllstandshöhe ausreichend Zeit zum Signalverarbeiten und Ventilschließen vorhanden ist, bevor das Behältnis überfüllt wird.

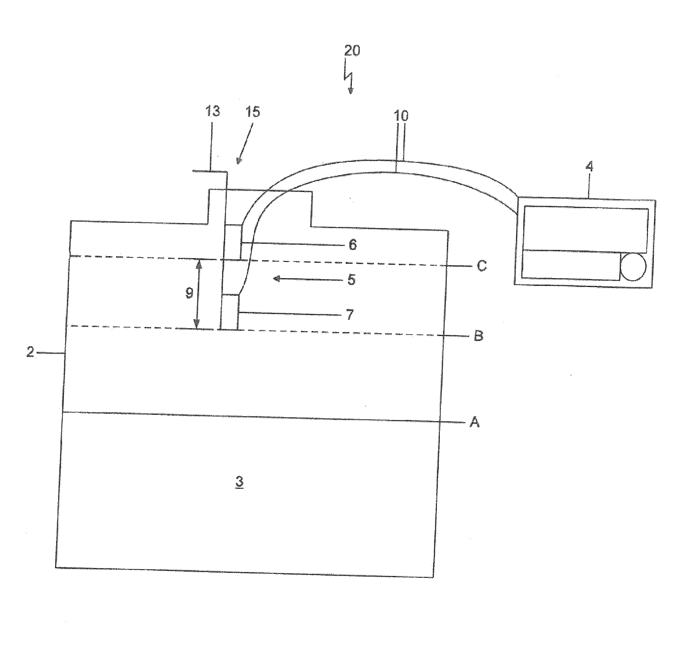

Weitere Vorteile und vorteilhafte Ausgestaltungen des Gegenstandes der Erfindung sind der Beschreibung, der Zeichnung und den Ansprüchen entnehmbar.

Ein Ausführungsbeispiel eines Überfüllschutzsystems nach der Erfindung ist in der Zeichnung schematisch vereinfacht dargestellt und wird in der nachfolgenden Beschreibung näher erläutert.

Die einzige Figur der Zeichnung zeigt eine schematische Ansicht eines Überfüllschutzsystems nach der Erfindung.

In der Zeichnung ist ein Überfüllschutzsystem 20 nach der Erfindung abgebildet. Das Überfüllschutzsystem 20 umfasst eine Baueinheit 15 und eine Überwachungseinrichtung 4. Beide sind mittels einer drahtgebundenen Signalverbindung 10 verbunden. Die Baueinheit 15 ist am Behältnis 2 platziert, die Überwachungseinrichtung 4 ist außerhalb des Behältnisses 2 platziert.

Das Behältnis 2 weist eine oberseitige Öffnung auf und ist mit einer Flüssigkeit 3 gefüllt. Die Flüssigkeit 3 ist für drei verschiedene Füllmengen abgebildet mit jeweils einem zugehörigen Füllstand. Einen aktuellen Füllstand der Flüssigkeit 3 zeigt ein Füllstand A. Einen Füllstand, der mit der Baueinheit 15 korrespondiert, zeigt ein erster Füllstand B. Eine Höchstbefüllgrenze zeigt ein Maximalfüllstand C, welcher ebenfalls mit der Baueinheit 15 korrespondiert.

Die Baueinheit 15 umfasst eine Trageeinheit 13 und eine Sensoranordnung 5. Die Baueinheit 15 ist an der oberseitigen Öffnung des Behältnisses 2 befestigt, so dass die Trageeinheit 13 senkrecht in das Behältnis 2 hineinragt. Die Sensoranordnung 5 besteht aus zwei Schwimmersensoren 6, 7. Die Schwimmersensoren 6, 7 sind übereinander angeordnet und verschiebbar an der Trageeinheit 13 befestigt. Bezogen auf eine Füllrichtung hat ein Messpunkt des ersten Sensors 7 der Sensoranordnung 5 eine Distanz D 9 zu einem Messpunkt des zweiten Sensors 6. Die dargestellte Distanz D 9 entspricht, bezogen auf die Füllrichtung, einer Strecke, welche einem Füllstandsanstieg zwischen einem Registrieren des ersten Füllstands B und einem Beenden des Befüllvorgangs entspricht.

Die Überwachungseinrichtung 4 ist über eine nicht dargestellte Signalverbindung mit einem Befüllsystem verbunden.

Das Befüllsystem befüllt das Behältnis 2 mit der Flüssigkeit 3. Ein Befüllvorgang findet zunächst mit einer weitestgehend maximalen, vorzugsweise mit einer maximalen Füllgeschwindigkeit statt. Der steigende Füllstand A erreicht so den Messpunkt des ersten Sensors 7, so dass dieser den ersten Füllstand B misst und ein erstes Füllstandssignal über die drahtgebundene Signalverbindung 10 an die Überwachungseinrichtung 4 übermittelt. Die Überwachungseinrichtung 4 reduziert nach Empfang des ersten Füllstandssignals die Füllgeschwindigkeit, um den zweiten Sensor 6 bzw. den Maximalfüllstand C genau anfahren zu können. Nach einem weiteren Zulauf der Flüssigkeit 3 misst der zweite Sensor 6 an seinem Messpunkt den Maximalfüllstand C. Der zweite Sensor 6 übermittelt umgehend nach der Messung ein zweites Füllstandssignal über die Signalverbindung 10 an die Überwachungseinrichtung 4. Nach Empfang des zweiten Füllstandssignals beendet die Überwachungseinrichtung 4 den mittels des Befüllsystems erfolgten Befüllvorgang.

### Bezugszeichenliste

- A: Füll stand
- B: erster Füllstand
- C: Maximalfüllstand
- 2: Behältnis
- 3: Flüssigkeit
- 4: Überwachungseinrichtung
- 5: Sensoranordnung
- 6: zweiter Sensor
- 7: erster Sensor
- 9: Distanz D
- 10: Signalverbindung
- 13: Trageeinheit
- 15: Baueinheit
- 20: Überfiillschutzsystem

## Patentansprüche

1. Überfüllschutzsystem (20) zur automatischen Überwachung eines Füllstands (A) in einem Behältnis (2), welches über ein Ventil durch ein Befüllsystem mit einer Flüssigkeit (3) befüllbar ist und eine Öffnung aufweist, bestehend aus einer Überwachungseinrichtung (4) und einer Sensoranordnung (5), welche mit der Überwachungseinrichtung (4) über eine Signalverbindung (10) zusammenwirkt und welche einen ersten Sensor (7) umfasst, der während einer Überwachungsdauer in dem Behältnis (2) angeordnet und mit diesem lösbar verbunden ist, **dadurch gekennzeichnet, dass** die Sensoranordnung (5) einen zweiten Sensor (6) umfasst, der während der Überwachungsdauer ebenfalls in dem Behältnis angeordnet und mit demselben lösbar verbunden ist, und dass der erste Sensor (7) bezogen auf eine zumindest weitgehend vertikale Füllrichtung tiefer angeordnet ist als der zweite Sensor (6).

2. Überfüllschutzsystem (20) nach Anspruch 1, **dadurch gekennzeichnet, dass** mindestens einer der beiden Sensoren (6, 7) ein Schwimmersensor ist.

3. Überfüllschutzsystem (20) nach einem der Ansprüche 1 oder 2, **dadurch gekennzeichnet, dass** der erste Sensor (7) und der zweite Sensor (6) an einer Trageeinheit (13) befestigt sind und mit der Trageeinheit (13) eine Baueinheit (15) bilden.

4. Überfüllschutzsystem (20) nach Anspruch 3, **dadurch gekennzeichnet, dass** der erste Sensor (7) und der zweite Sensor (6) an der Trageeinheit (13) verschiebbar befestigt sind.

5. Überfüllschutzsystem (20) nach einem der Ansprüche 1 bis 4, **dadurch gekennzeichnet, dass** der zweite Sensor (6) während der Überwachungsdauer, bezogen auf die Füllrichtung, in Höhe eines Maximalfüllstandes (C) des Behältnisses (2) angeordnet ist.

6. Überfüllschutzsystem (20) nach einem der Ansprüche 1 bis 5, **dadurch gekennzeichnet, dass** der erste Sensor (7) bei Messung eines ersten, mit dem ersten Sensor (7) korrespondierenden Füllstands (B) ein erstes Füllstandssignal an die Überwachungseinrichtung (4) übermittelt.

7. Überfüllschutzsystem (20) nach Anspruch 6, **dadurch gekennzeichnet**, die Überwachungseinrichtung (4) nach Empfang des ersten Füllstandssignals eine Befüllgeschwindigkeit des Befüllsystems für das Behältnis (2) reduziert.

8. Überfüllschutzsystem (20) nach einem der Ansprüche 1 bis 7, **dadurch gekennzeichnet, dass** der zweite Sensor (6) bei Messung eines zweiten, mit dem zweiten Sensor (6) korrespondierenden Maximalfüllstandes (C) ein zweites Füllstandssignal an die Überwachungseinrichtung (4) übermittelt.

9. Überfüllschutzsystem (20) nach Anspruch 8, **dadurch gekennzeichnet**, die Überwachungseinrichtung (4) nach Empfang des zweiten Füllstandssignals den mittels des Befüllsystems erfolgenden Befüllvorgang beendet.

10. Überfüllschutzsystem (20) nach einem der Ansprüche 1 bis 9, **dadurch gekennzeichnet, dass** eine Distanz D (9) zwischen einem Messpunkt des ersten Sensors und einem Messpunkt des zweiten Sensors bezogen auf die Füllrichtung gleich einer Strecke ist, welche einem Füllstandsanstieg zwischen dem Registrieren des ersten Füllstands (B) und dem Beenden des Befüllvorgangs entspricht.
